# EUROPÄISCHE PATENTSCHRIFT

(11) **EP 1 581 421 B1**
(45) Veröffentlichungstag und Bekanntmachung des Hinweises auf die Patenterteilung: **07.06.2006**
(21) Anmeldenummer: 03785835.4
(22) Anmeldetag: 16.12.2003
(51) Int. Cl.: B62D 21/02, B62D 21/09

(54) **RAHMENVORDERTEIL FÜR EIN NUTZFAHRZEUG**
FORWARD FRAME PART FOR A UTILITY VEHICLE
PARTIE AVANT DE CHASSIS POUR VEHICULE UTILITAIRE

(30) Priorität: 09.01.2003 DE 10300393
(43) Veröffentlichungstag der Anmeldung: 05.10.2005
(73) Patentinhaber: DaimlerChrysler AG, 70567 Stuttgart (DE)
(72) Erfinder: MARTIN, Gerd, 70327 Stuttgart (DE); STOCKKLAUSNER, Wilhelm, 73207 Plochingen (DE)
(86) Internationale Anmeldenummer: PCT/EP2003/014309
(87) Internationale Veröffentlichungsnummer: WO 2004/062984

(56) Entgegenhaltungen:
- DE-A- 2 618 198
- DE-A- 4 322 717
- DE-C- 10 210 147

## Beschreibung

Die Erfindung betrifft ein Rahmenvorderteil für ein Nutzfahrzeug nach dem Oberbegriff des Patentanspruchs 1.

Ein Rahmenvorderteil ist aus DE 44 28 101 A 1 bekannt. Jenes bekannte Rahmenvorderteil besteht aus einzelnen, zusammengesetzten Bauelementen, wobei für unterschiedliche Fahrzeugvarianten jeweils im wesentlichen komplett unterschiedliche Rahmenvorderteile erforderlich sind.

Ein gattungsgemäßes Rahmenvorderteil ist aus DE 26 18 198 bekannt.

Die Erfindung beschäftigt sich mit dem Problem, gattungsgemäße Rahmenvorderteile für Nutzfahrzeuge zu schaffen, mit denen unter Verwendung von möglichst vielen einfach aufgebauten Gleichteilen unterschiedliche Fahrzeugvarianten mit entsprechend unterschiedlichen Rahmenvorderteilen ausgestattet werden können.

Gelöst wird dieses Problem in erster Linie durch eine Ausgestaltung eines gattungsgemäßen Rahmenvorderteiles nach dem kennzeichnenden Merkmal des Patentanspruchs 1.

Zweckmäßige und vorteilhafte Ausgestaltungen der Erfindung sind Gegenstand der Unteransprüche.

Die Erfindung beruht insbesondere auf dem allgemeinen Gedanken, das Rahmenvorderteil aus einem vorderen und hinteren Hauptmodul aufzubauen, von denen das hintere Hauptmodul bauteilmäßig unverändert für im vorderen Bereich unterschiedliche Fahrzeugvarianten eingesetzt werden kann, während das vordere Hauptmodul unter Austausch von möglichst wenigen, einfach herstellbaren Einzelelementen unterschiedlichen Fahrzeugvarianten leicht anpassbar ist. Darüber hinaus sollen sämtliche Moduleinzelbauteile einfach herstellbar sein und zu diesem Zweck entweder aus geformtem Blech, einfachen Profilen oder Gussteilen bestehen. Darüber hinaus sind sowohl die Einzelelemente der Hauptmodule sowie auch die beiden Module untereinander durch einfach mon- und demontierbare Verschraubungen verbindbar ausgestaltet. Im Reparaturfall können verschraubte einzelne Modulelemente einfach ausgetauscht werden. An dem hinteren Hauptmodul mit dem Fahrschemel können sämtliche Teile einer Einzelradaufhängung einschließlich Teile der Lenkung angebracht werden, wodurch die Einzelradaufhängung an dem hinteren Hauptmodul vormontier- und justierbar ist oder im vormontierten und justierten Zustand angebracht werden kann.

Durch die erfindungsgemäße Modulbauweise lassen sich unterschiedliche Fahrzeugvarianten wie Straßen-, niedrige Rahmen-, Low-Liner-, Baustellen-, Niederflur- und Geräteträgerfahrzeuge für unterschiedliche Einzelradaufhängungen für Nichtallrad- und Allradfahrzeuge leicht darstellen.

Die Einzelteile der Hauptmodule sind aus wenigen einfachen, zum Teil gleichen und weltweit zu idustrialisierenden Teilen (Kantteile, Rohrprofile, Gussteile; das heißt keine Pressteile) zusammensetzbar.

Der vordere Querträger besteht aus einem oberen und unteren Querträgerteil, wobei beide Querträgerteile einfache Profilträger sind. Miteinander verbunden sind die Querträgerteile im Seitenbereich durch eine Anbindung an seitliche Vorderrahmen-Längsträger.

Die Vorderrahmen-Längsträger besitzen eine gebaute Struktur und bestehen jeweils aus einem Ober- und Untergurt, wobei diese beiden Gurte durch Stegbleche verbunden ein tragendes Strukturteil bilden. Ober-, Untergurt und Stegbleche sind je nach unterschiedlichem vorderem Hauptmodul in Höhe und Länge unterschiedlich, aber prinzipiell gleichartig ausgeführt. Durch einen großen Randfaserabstand zwischen Ober- und Untergurt wird jeweils ein sehr biegesteifer und leichter Träger erreicht.

Der Obergurt besteht aus einem L-Winkelprofil und hat die Funktion, Abschlepp- und Fahrerhauslagerungskräfte aufzunehmen und weiterzuleiten.

Die Verbindung von Ober- zu Untergurt wird durch seitliche, je nach Modul unterschiedlich hohe und lange Stegbleche erreicht, welche oben mit Abstandselementen mit dem Obergurt und unten direkt mit dem Untergurt verbunden, insbesondere verschraubt werden. Die Abschlepp- und Fahrerhauslagerungskräfte werden in ein am vorderen Ende des Obergurtes angeordnetes, insbesondere gegossenes Eckstück eingeleitet, welches zwischen dem Steg des Winkelprofils des Obergurtes und dem Stegblech verschraubt wird. Der Steg des Obergurtes und das vertikale Stegblech bilden auf diese Weise ein Sandwichelement, welches eine sehr hohe Biegesteifigkeit um die Hochachse hat und die Fahrerhauslagerungs- und Abschleppkräfte sehr gut aufnehmen und weiterleiten kann.

Das Eckstück zur Aufnahme der Fahrerhauslagerungskräfte, Abschleppkräfte und des oberen Querträgerteils des vorderen Querträgers ist für alle Fahrzeugvarianten einer vorgebbaren Fahrzeuggruppe gleich. Die Form des Eckstückes ist so gewählt, dass es symmetrisch zu einer Mittelebene ist, die wiederum parallel zur Fahrbahn liegt. Hierdurch kann das gleiche Eckstück auf der linken und rechten Seite des vorderen Hauptmodules verwendet werden.

Die Anbindung des Obergurtes erfolgt je nach Modultyp an unterschiedlichen Positionen an den Fahrzeugrahmen-Längsträgern. Für Straßen, niedrige Rahmen, Low-Liner-, Baustellen- und Geräteträgerfahrzeuge erfolgt die Anbindung in einem oberen Bereich des Fahrzeuglängsträgers. Für Fahrzeuge mit beispielsweise einem abgesenkten Fahrerhaus werden zur Schaffung des nötigen Freiraumes zwischen Fahrerhaus und Rahmen die Obergurte des vorderen Hauptmodules unten mit den Längsträgern des Fahrzeugrahmens verschraubt.

Der Untergurt hat die Funktion, Kräfte und Momente aufzunehmen und weiterzuleiten, die durch seitlich in den jeweils zugeordneten Längsträger des Fahrzeugrahmens eingeleitete Unterfahrschutzkräfte, die an dem unteren Querträgerteil angreifen, entstehen und kann als Crashelement ausgeführt werden.

Die Anbindung der Untergurte an das hintere Hauptmodul erfolgt jeweils über eine insbesondere gegossene Momentenstütze, an welche auch der untere Längslenker einer Vorderachs-Einzelradaufhängung angebunden wird. Je nach Ausführung der Einzelradaufhängung in nicht Allrad- oder Allradausführung wird der Untergurt in verschiedenen Höhen mit diesem Längslenkerteil, das als Gussteil ausgeführt sein kann, verschraubt. Hierdurch können bei einem gleichen vorderen und hinteren Hauptmodulteil unterschiedliche Abstände der Einzelradaufhängung zum Fahrgestellrahmen für nicht Allrad- oder Allradfahrzeuge dargestellt werden.

Eine linke und rechte Momentenstütze werden durch ein Querrohr und ein Querschubblech zur Momenten- beziehungsweise Querkraftabstützung verbunden. Die Momentenstützen, das Querrohr und das Querschubblech, die im Verband eine Art Bügel zur Momentenaufnahme der Unterfahrschutzkräfte bilden, sind wiederum für alle Fahrzeuge gleich. Das vorgenannte Querschubblech ist eine Spezialausfertigung des erfindungsgemäß plattenförmigen Verbindungsteiles.

Die Einleitung der Längskräfte aus dem vorderen Hauptmodulteil in das hintere Hauptmodulteil einschließlich der Längsträger des Fahrzeugrahmens erfolgt im wesentlichen über folgende Bauelemente:
a) das jeweilige L-Profil der Längsträgerobergurte,
b) ein erstes vertikal angeordnetes Schubblech als oberer Seitenträger des Hauptmoduls, das an den jeweils zugeordneten Längsträger des Fahrzeugrahmens seitlich angeschraubt wird. Dieses Schubblech ist für alle zu variierende Fahrzeugtypen und alle Achsanordnungen einer ausgewählten Fahrzeuggruppe mit Nichtallrad- oder Allradantrieb gleich. Für die unterschiedlichen Achsanordnungen wird das vertikale Schubblech in verschiedenen Höhenpositionen mit der Momentenstütze, die als Längslenkerteil einer Einzelradaufhängung dient, mit dem Fahrschemel verbunden,
c) ein zweites vertikal angeordnetes Schubblech als unterer Seitenträger des hinteren Hauptmoduls, welches gleichzeitig die Funktion einer Stabilisatorlagerung hat. Dieses Schubblech verbindet die Momentenstütze (Längslenkerteil) einschließlich Längslenkerteil mit Fahrschemel und ist wiederum für alle Fahrzeugtypen gleich. Es kann zum Austausch des Stabilisators oder der Einzelradaufhängungseinrichtung demontiert werden, ohne dass die Anbindung der Hauptmodule gelöst werden muss.

Die Momenteneinleitung vom vorderen Hauptmodul zum hinteren Hauptmodul des Rahmenvorderteiles erfolgt um die Fahrzeugquerachse über eine große Abstandsbasis des Obergurtes des vorderen Hauptmoduls zu den unteren Anbindungspunkten der Schubbleche als Seitenträger. Bei einer Verschraubung der Teile untereinander ist die Schraubenbeanspruchung insgesamt relativ gering.

Die Querabstützung des vorderen Hauptmoduls übernehmen die als Sandwichelemente ausgeführten Vorderrahmenlängsträger und ein unten parallel zur Fahrbahn angeordnetes Schubblech als plattenförmiges Verbindungsteil in Nomenklatur nach den Patentansprüchen.

Verschiedene besonders vorteilhafte Ausführungen des erfindungsgemäßen Rahmenvorderteils sind in der Zeichnung dargestellt.

In dieser zeigen
- Fig. 1: eine perspektivische Explosionsdarstellung eines aus einem vorderen und hinteren Hauptmodul bestehenden Rahmenvorderteils,
- Fig. 2: eine Zusammenbaudarstellung zu der Explosionsdarstellung in Fig. 1,
- Fig. 3: das Rahmenvorderteil nach Fig. 1 und 2 in verschiedenen Ansichten,
- Fig. 4: ein Rahmenvorderteil mit einem gegenüber demjenigen nach den Fig. 1 bis 3 modifizierten vorderen Hauptmodul,
- Fig. 5: ein Rahmenvorderteil nach den vorstehenden Figuren mit einem nochmals abgewandelten vorderen Hauptmodulteil,
- Fig. 6: eine vergleichende Darstellung von drei Rahmenvorderteilen mit unterschiedlichen vorderen Hauptmodulen bei jeweils gleichem hinteren Hauptmodul.

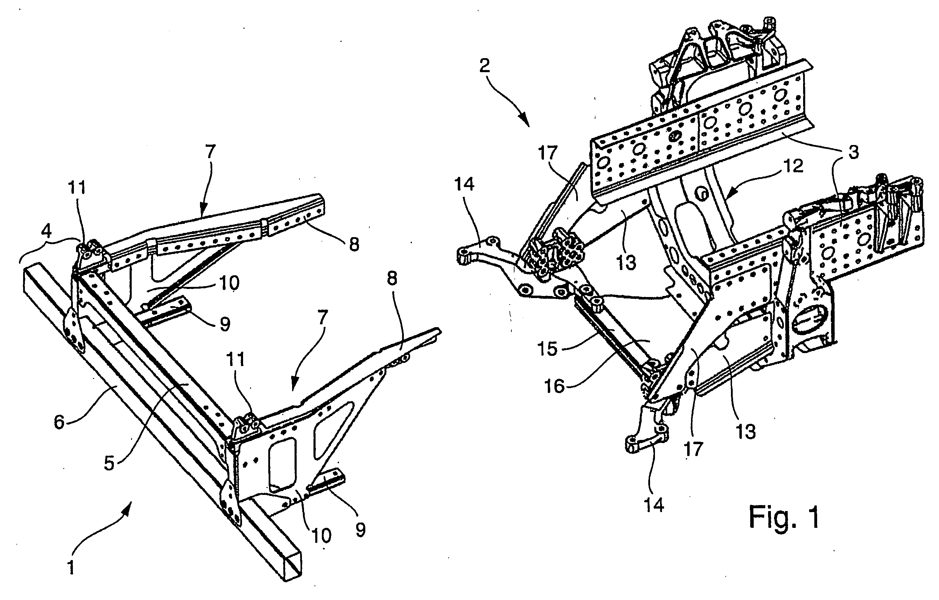

### Ausführung nach Fig. 1 bis 3

Ein Rahmenvorderteil eines Nutzfahrzeuges besteht aus einem vorderen und hinteren Hauptmodul 1; 2, von denen das hintere Hauptmodul 2 mit den Längsträgern 3 des Fahrzeugrahmens verbunden ist und zwar durch Verschraubung.

Das vordere Hauptmodul setzt sich zusammen aus einem vorderen Querträger 4 mit einem oberen Querträgerteil 5 und einem unteren, die Funktion eines Unterfahrschutzes ausübenden unteren Querträgerteil 6 sowie seitlichen Vorderrahmen-Längsträgern 7, die fest mit dem vorderen Querträger 4 verschraubt sind.

Die Vorderrahmen-Längsträger 7 setzen sich zusammen aus einem Obergurt 8 in der Form eines L-Profiles aus geformtem Blech, einem Untergurt 9 aus einem einfachen Trägerprofil sowie verbindenden Seitenschubblechen 10. Obergurt 8 und Untergurt 9 sind mit den Seitenschubblechen 8 zu einer steifen Tragstruktur verbunden. An der zur Fahrzeugvorderseite liegenden Frontseite der Seitenschubbleche 10 sind die vorderen Querträgerteile 5, 6 angeschraubt, wodurch wiederum ein tragfähiges Verbundteil mit Bezug auf den vorderen Querträger 4 erreicht wird. Bei den Vorderrahmen-Längsträgern 7 können einteilig ausgebildet sein entweder jeweils lediglich einer der Ober- und Untergurte 8, 9 mit dem dazwischen liegenden Seitenschutzblech 11 oder beide Gurte 8, 9.

Die Verbindung zwischen den Enden des oberen Querträgerteiles 5 und den angrenzenden Enden der Obergurte 8 erfolgt über jeweils ein stabiles, insbesondere gegossenes, Eckstück 11, das in Richtung des oberen Querträgerteiles 5 und des Obergurtes 8 Stege besitzt, durch die zwischen dem oberen Querträgerteil 5 einerseits und dem Obergurt 8 andererseits jeweils bei erfolgter Verbindung ein Überlappungsbereich gegeben ist. Die Eckstücke 11 sind derart ausgebildet, dass gleiche Eckstücke links und rechts eingesetzt werden können. Zu diesem Zweck besitzen die Eckstücke 11 ober- und unterhalb einer parallel zur Fahrbahn verlaufenden Ebene eine gleiche Ausbildung, so dass je nach Einbau links oder rechts immer eine gleiche Eckstückausbildung nach oben als Teil der Fahrerhauslagerung und Abschleppeinrichtung dienen kann.

Die freien, nach hinten ragenden Enden der Ober- und Untergurte 8, 9 sind mit Befestigungseinrichtungen, beispielsweise Befestigungslöchern, zum Befestigen der Obergurte 8 an den Längsträgern 3 des Fahrzeugrahmens und des Untergurtes 9 an dem hinteren Hauptmodul 2 versehen.

Das hintere Hauptmodul 2 setzt sich aus folgenden Einzelmodulteilen zusammen.

Ein etwa U-förmiger Fahrschemel 12 mit unten liegendem geschlossenen U-Bogen und etwa vertikal nach oben ragenden U-Schenkeln trägt über im unteren Bereich der U-Schenkel angeschraubte untere - in der Form von Schubblechen ausgebildete - Seitenträger 13 gegossene Momentenstützen 14. Die Momentenstützen 14 sind über eine als Querträger ausgebildete Momentenstützenverbindung 15 in Fahrzeugquerrichtung miteinander verbunden, insbesondere verschraubt. Die Momentenstützenverbindung 15 ist wiederum mit dem geschlossenen U-Bogen des Fahrschemels 12 über ein als Schubblech ausgebildetes plattenförmiges Verbindungsteil 16 verbunden. Fest mit den Momentenstützen 14 verbunden, insbesondere verschraubt, sind ferner als Schubbleche ausgebildete obere Seitenträger 17.

An dem vorstehend beschriebenen hinteren Hauptmodul 2 können sämtliche Teile einer Vorderachs-Einzelradaufhängung befestigt werden und zwar insbesondere an dem Fahrschemel 12 einschließlich der Momentenstützen 14 zur Aufnahme von Lenkern der Einzelradaufhängung.

Zusammen mit einer vormontierten Einzelradaufhängung kann das hintere Hauptmodul 2 an die Längsträger 3 angeschraubt werden und zwar über die U-Schenkel des Fahrschemels 12 einerseits und die oberen Seitenträger 17 andererseits. An der Momentenstütze 14 ist ein Aufnahmelochbild ausgebildet, durch das ein Anschrauben des hinteren Hauptmoduls 2 in verschiedenen Höhen an den oberen Seitenträgern 17 möglich ist.

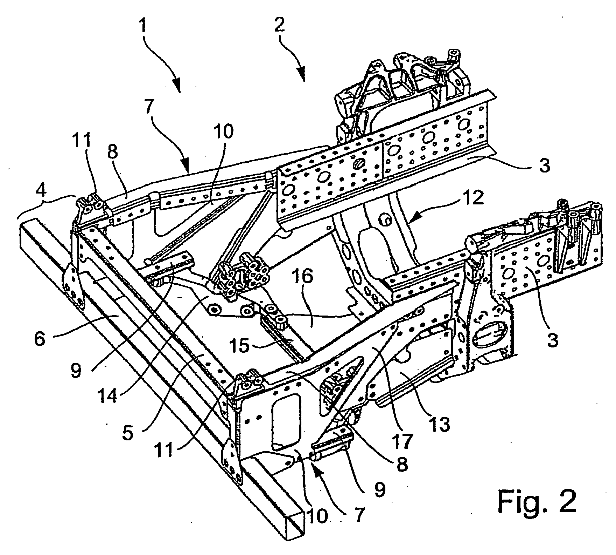

In dem in Fig. 2 gezeigten Zusammenbauzustand von vorderem und hinterem Hauptmodul 1, 2 sind die Obergurte 8 mit den Längsträgern 3 verschraubt und die Untergurte 9 mit den Momentenstützen 14.

Durch die an dem unteren Querträgerteil 6 und der Momentenstütze 14 angeschraubten Untergurte 9 ergibt sich ein stabiler Querträgerverband mit einer schubfeldartigen Aussteifung des Rahmenvorderteiles. Dies führt zu einer erhöhten Schub- und Torsionssteifigkeit des Vorderrahmens. Unterfahrschutzkräfte werden durch die rahmenartige Ausbildung bei der Anbindung an die Momentenstützen 14 momentenmäßig in den Momentenstützen 14 sicher abgestützt. Im Übrigen ist um die Fahrzeughochachse eine momentenfreie Weiterleitung der Unterfahrschutzkräfte über die Seitenträger 17 in die Längsträger 3 sichergestellt. Über das Verbindungsschubblech 16 werden Querkräfte direkt über Schub zum Fahrschemel 12 geleitet.

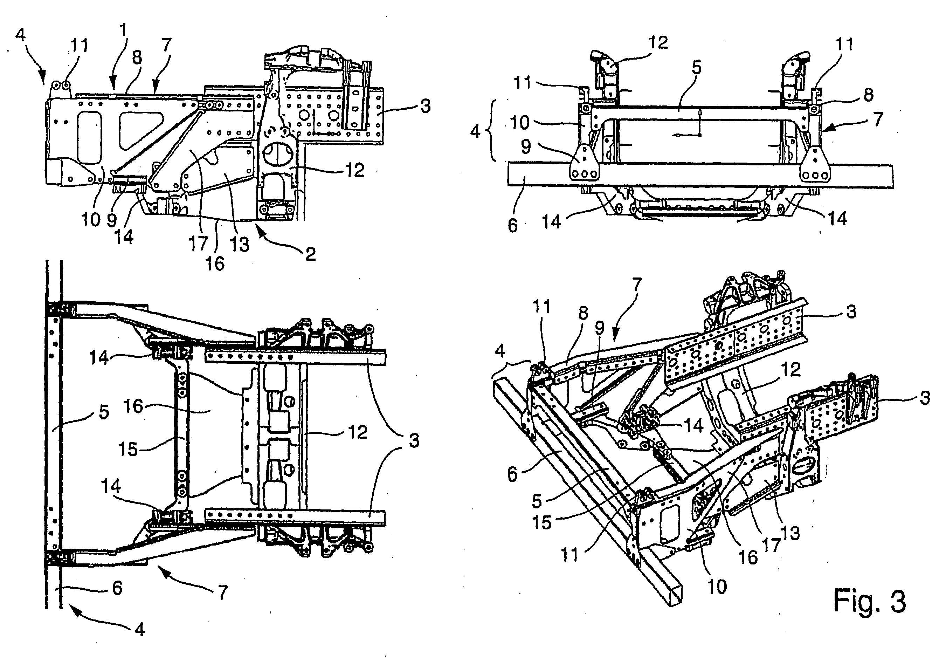

Der vorstehend beschriebene Aufbau des Rahmenvorderteiles ist mit Bezug auf die Darstellung in Fig. 2 in Fig. 3 in verschiedenen Ansichten deutlich erkennbar.

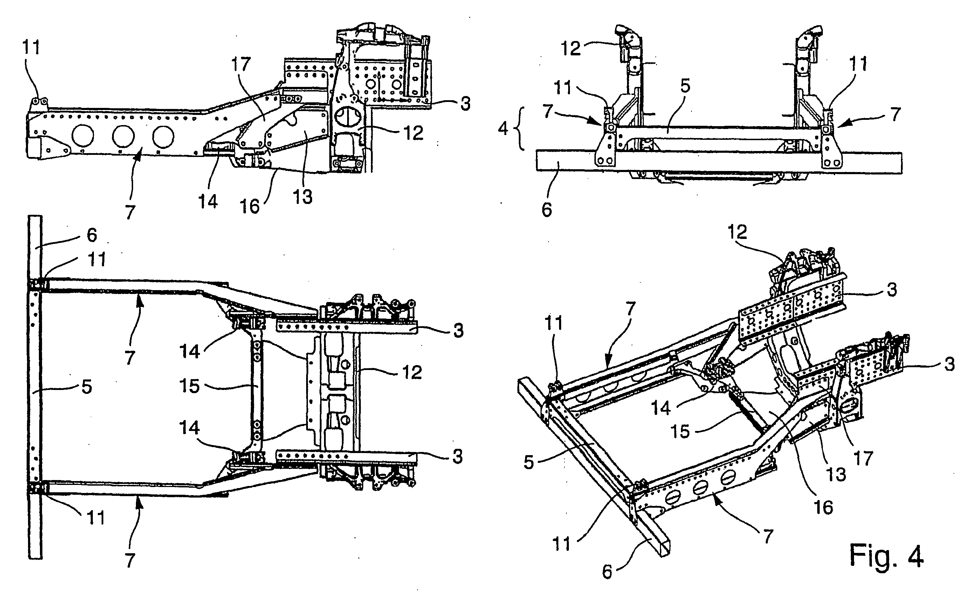

### Ausführung nach Fig. 4

Das Rahmenvorderteil nach Fig. 4 besitzt grundsätzlich den gleichen Aufbau wie dasjenige nach den Fig. 1 bis 3 mit lediglich einem modifizierten vorderen Hauptmodul 1. Dieses vordere Hauptmodul 1 besitzt für eine Niederflurvariante eines Nutzfahrzeuges längere Vorderrahmen-Längsträger 7 und ist darüber hinaus zusammen mit dem hinteren Hauptmodul 2 in einer niedrigeren Höhe mit Bezug auf die Fahrzeughochachse an den Längsträgern 3 angeschraubt als dies bei der Ausführung nach den Fig. 1 bis 3 der Fall ist. Funktionell gleiche Teile sind in der Fig. 4 mit gegenüber der Ausführung nach den Fig. 1 bis 3 gleichen Bezugszeichen belegt.

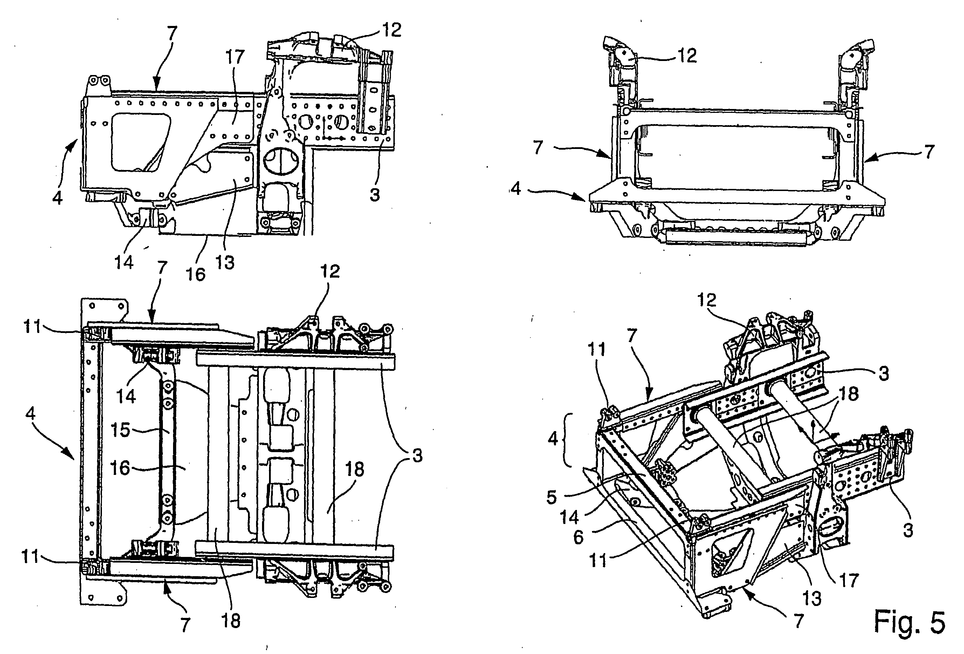

### Ausführung nach Fig. 5

Bei dieser Ausführung handelt es sich um eine sogenannte Geräteträgerausführung eines Nutzfahrzeug-Rahmenvorderteiles. Auch hier sind wieder funktionsgleiche Bauteile mit gegenüber den anderen Ausführungen gleichen Bezugszahlen belegt. Eine Besonderheit dieser Ausführung besteht darin, dass die Längsträger 3 im Bereich ihrer Anbindung an den Fahrschemel 12 zusätzlich durch in Längsrichtung mit Abstand parallel zueinander angeordnete Versteifungsträger 18 zusätzlich stabilisiert sind.

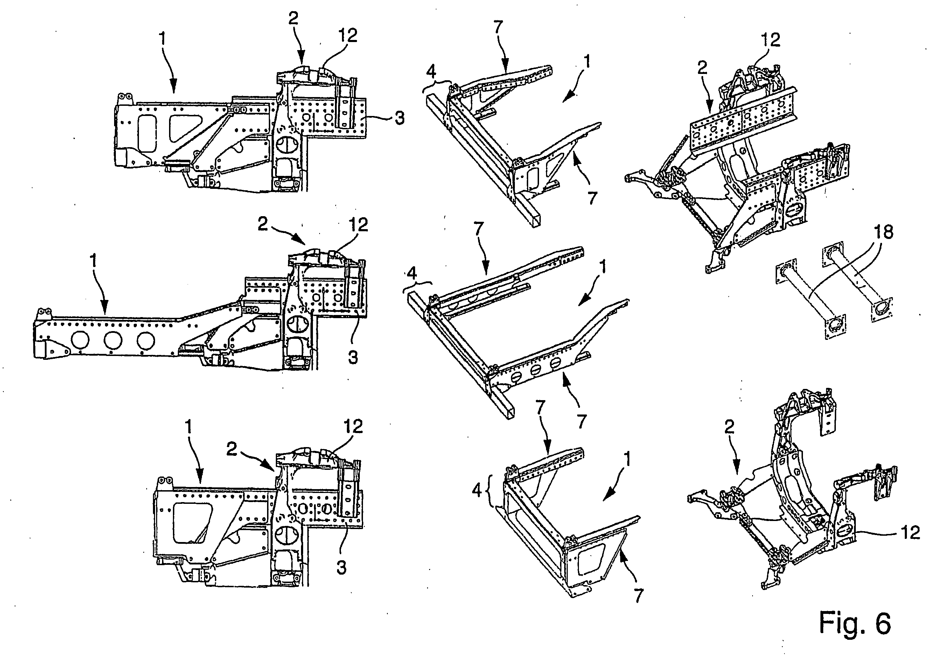

Fig. 6 zeigt eine vergleichende Darstellung der Ausführungen nach den Fig. 1 bis 3 sowie 4 und 5. Diese Darstellung macht nochmals deutlich, dass für alle unterschiedlichen Fahrzeugvarianten jeweils ein gleiches hinteres Hauptmodul 2 einsetzbar ist und dass auch die wenigen zur Darstellung aller Fahrzeugvarianten vorderen Hauptmodule 1 trotz ihrer verschiedenen Abmessungen einerseits grundsätzlich gleich aufgebaut und andererseits eine Vielzahl von Gleichteilen enthalten.

Abschließend soll bezüglich des besonderen Vorteils, der mit der Erfindung erzielt werden kann, darauf hingewiesen werden, dass dieser insbesondere in der Verwendung einfach herstellbarer und weltweit industrialisierbarer Einzelteile (Kantteile, keine Pressteile) besteht, die unter Verwendung einer Vielzahl von Gleichteilen zu größeren Modulen zusammenfassbar sind. Sämtliche Einzelbauteile können bei einer Verbindung durch Verschraubung einfach demontiert und im Reparaturfalle ausgewechselt werden.

## Patentansprüche

1. Rahmenvorderteil für ein Nutzfahrzeug, das mit zwei Längsträgern eines Fahrzeugtragrahmens verbindbar ist und einen vorderen Querträger mit einem Querträgerober- und -unterteil, von denen das Unterteil als Unterfahrschutz dient, sowie Befestigungselemente für die Verbindung mit den beiden Längsträgern umfasst, wobei
- das Rahmenvorderteil sich aus modulartig miteinander verbindbaren, einzelnen Bauelementen zusammen setzt wobei,
- die modulartig verbindbaren Bauelemente zwei Hauptmodule und ein Anbindungsmodul umfassen, nämlich
- ein hinteres Hauptmodul (2) mit einem U-förmigen Fahrschemel (12) mit einem unten liegenden geschlossenen U-Bogen und in Fahrzeughochachse verlaufenden U-Schenkeln, **gekennzeichnet durch** die Merkmale, -die U-Schenkeln des Fahrschemels (12) dienen zum Anbringen einer Einzelrad-Aufhängungseinrichtung, und mit dem Fahrschemel (12) verbindbaren unteren Seitenträgern (13) mit an deren gegenüber der Anbindung an den Fahrschemel (12) gelegenen Enden angebundenen Momentenstützen (14) mit einer Momentenstützenverbindung (15), einem plattenförmigen Verbindungsteil (16) zwischen der Momentenstützenverbindung (15) und einem unten liegenden Bereich des Fahrschemels (12),
- einem vorderen Hauptmodul (1) mit dem vorderen Querträger (4) sowie jeweils seitlichen Vorderrahmen-Längsträgern (7) mit Anbindungsmöglichkeiten an das hintere Hauptmodul (2) sowie die Längsträger (3) des Fahrzeugrahmens,
- ein Anbindungsmodul bestehend aus zwei einzelnen oberen Seitenträgern (1, 7) mit Anbindungsmöglichkeiten einenends an die Längsträger (3) des Fahrzeugrahmens und anderenends an die Momentenstützen (14),
- das hintere Hauptmodul (2) ist über den Fahrschemel (12) und die oberen Seitenträger (17) mit den Längsträgern (3) des Fahrzeugrahmens verbindbar.

2. Rahmenvorderteil nach Anspruch 1, **gekennzeichnet durch** die Merkmale,
- das obere Querträgerteil (5) des vorderen Hautmoduls (1) ist an seinen stirnseitigen Enden über je ein Eckstück (11) mit dem jeweils angrenzenden Vorderrahmen-Längsträger (7) verbunden,
- die Eckstücke (11) dienen als Lageraufnahmen für ein Fahrerhaus sowie gegebenenfalls zusätzlich als Abschlepplager,
- die beiden Eckstücke (11) sind als für beide Seiten einsetzbare Gleichstücke ausgebildet, wozu sie mit Bezug auf die Fahrzeuglängsachse um 180° verdrehbar einsetzbar gestaltet sind.

3. Rahmenvorderteil nach Anspruch 1 oder 2,
**dadurch gekennzeichnet,**
**dass** die Vorderrahmen-Längsträger (7) aus einfach herstellbaren Einzelteilen zusammengefügt sind, wobei jeweils ein Ober- und Untergurt (8, 9) durch ein Seitenschutzblech (11) miteinander verbunden sind.

4. Rahmenvorderteil nach Anspruch 3,
**dadurch gekennzeichnet,**
**dass** die Obergurte (8) der Vorderrahmen-Längsträger (7) jeweils als ein L-Profil ausgebildet sind.

5. Rahmenvorderteil nach einem der vorhergehenden Ansprüche,
**dadurch gekennzeichnet,**
**dass** die Momentenstützen (14) als Gussteile ausgebildet sind.

6. Rahmenvorderteil nach Anspruch 5,
**dadurch gekennzeichnet,**
**dass** die Momentenstützen (14) zur Abstützung von Lenkern einer an dem Fahrschemel (12) angebrachten Einzelrad-Aufhängungseinrichtung dienen.

7. Rahmenvorderteil nach einem der vorhergehenden Ansprüche,
**dadurch gekennzeichnet,**
**dass** die Seitenträger (13, 17) des hinteren Hauptmoduls (2) aus geformten Blechen bestehen.

8. Rahmenvorderteil nach einem der vorhergehenden Ansprüche,
**dadurch gekennzeichnet,**
**dass** der Fahrschemel (12) zur Erzielung unterschiedlicher Höhenlagen gegenüber den Längsträgern (3) des Fahrzeugrahmens in verschiedenen Höhenpositionen an den Längsträgern (3) befestigbar ist.

9. Rahmenvorderteil nach einem der vorhergehenden Ansprüche,
**dadurch gekennzeichnet,**
**dass** die oberen Seitenträger (17) zur Erzielung unterschiedlicher Höhenlagen des hinteren Hauptmoduls (2) gegenüber den Längsträgern (3) des Fahrzeugrahmens in verschiedenen Höhenpositionen an den Momentenstützen (14) befestigbar sind.

## Claims

1. Forward frame part for a utility vehicle, which can be connected to two longitudinal members of a vehicle supporting frame and comprises a front cross member with a cross-member upper and lower part, of which the lower part serves as an underride guard, and also fastening elements for the connection to the two longitudinal members,
- the forward frame part being composed of individual structural elements which can be connected to one another in the manner of a module,
- the structural elements which can be connected in the manner of a module comprising two main modules and a joining module, namely
- a rear main module (2) with a U-shaped chassis underframe (12) having a closed U-bow situated at the bottom and U-limbs running in the vertical axis of the vehicle, **characterized by** the following features
- the U-limbs of the chassis underframe (12) serve for the attachment of an individual wheel suspension device, and lower side members (13) which can be connected to the chassis underframe (12) and have torque supports (14), which are joined to their ends placed opposite the joining to the chassis underframe (12) and have a torque support connection (15) and a plate-like connecting part (16) between the torque support connection (15) and a region of the chassis underframe (12) that is situated at the bottom,
- a front main module (1) with the front cross member (4) and in each case lateral forward frame longitudinal members (7) with joining possibilities to the rear main module (2) and to the longitudinal members (3) of the vehicle frame,
- a joining module, comprising two individual upper side members (1, 7) with joining possibilities at one end to the longitudinal members (3) of the vehicle frame and at the other end to the torque supports (14),
- the rear main module (2) can be connected via the chassis underframe (12) and the upper side members (17) to the longitudinal members (3) of the vehicle frame.

2. Forward frame part according to Claim 1,
**characterized by** the following features
- the upper cross-member part (5) of the front main module (1) is connected at its end-side ends via a respective corner piece (11) to the forward frame longitudinal member (7) which is adjacent in each case,
- the corner pieces (11) are used as bearing mounts for a driver's cab and, if appropriate, additionally as towing bearings,
- the two corner pieces (11) are designed as identical pieces which can be used for both sides, for which purpose they are designed in a manner such that they can be used such that they can be rotated through 180° with respect to the longitudinal axis of the vehicle.

3. Forward frame part according to Claim 1 or 2, **characterized in that** the forward frame longitudinal members (7) are joined together from individual parts which can be produced in a simple manner, a top and bottom cord (8, 9) being connected to each other in each case by means of a side protection plate (11).

4. Forward frame part according to Claim 3, **characterized in that** the top cords (8) of the forward frame longitudinal members (7) are in each case designed as an L-profile.

5. Forward frame part according to one of the preceding claims, **characterized in that** the torque supports (14) are designed as cast parts.

6. Forward frame part according to Claim 5, **characterized in that** the torque supports (14) are used for supporting links of an individual wheel suspension device attached to the chassis underframe (12).

7. Forward frame part according to one of the preceding claims, **characterized in that** the side members (13, 17) of the rear main module (2) consist of shaped plates.

8. Forward frame part according to one of the preceding claims, **characterized in that** the chassis underframe (12) can be fastened to the longitudinal members (3) in different height positions in order to obtain different height positions in relation to the longitudinal members (3) of the vehicle frame.

9. Forward frame part according to one of the preceding claims, **characterized in that** the upper side members (17) can be fastened to the torque supports (14) in different height positions in order to obtain different height positions of the rear main module (2) in relation to the longitudinal members (3) of the vehicle frame.

## Revendications

1. Partie avant de châssis pour un véhicule utilitaire, pouvant être reliée à deux longerons d'un cadre porteur de véhicule et comprenant une traverse avant avec une partie supérieure et une partie inférieure de traverse, dont la partie inférieure sert de dispositif anti-encastrement, et des éléments de fixation pour l'assemblage avec les deux longerons,
- la partie avant de châssis étant constituée de composants individuels pouvant être reliés entre eux de façon modulaire,
- les composants pouvant être reliés de façon modulaire comprenant deux modules principaux et un module de rattachement, à savoir
- un module principal (2) arrière avec un cadre auxiliaire (12) avec un coude en U fermé et situé en bas et des branchements en U agencés dans l'axe vertical du véhicule, **caractérisé par**, les branches en U du cadre auxiliaire (12) servant au placement d'un dispositif de suspension à roue individuelle, et des supports latéraux (13) inférieurs pouvant être reliés au cadre auxiliaire (12) avec des supports de couple (14) rattachés à leurs extrémités situées en face du rattachement au cadre auxiliaire (12) avec une liaison de supports de couple (15), une partie de liaison (16) en forme de plaque entre la liaison de supports de couple (15) et une zone située en bas du cadre auxiliaire (12),
- un module principal (1) avant avec la traverse (4) avant et des longerons de cadre avant (7) respectivement latéraux avec des possibilités de rattachement au module principal (2) arrière et aux longerons (3) du châssis de véhicule,
- un module de rattachement comprenant deux supports latéraux (1, 7) supérieurs individuels avec des possibilités de rattachement par une extrémité aux longerons (3) du châssis de véhicule et par l'autre extrémité aux supports de couple (14),
- le module principal (2) arrière peut être relié par le cadre auxiliaire (12) et les supports latéraux (17) supérieurs aux longerons (3) du châssis de véhicule.

2. Partie avant de châssis selon la revendication 1, **caractérisé par**,
- la partie de traverse (5) supérieure du module principal (1) avant est reliée sur ses extrémités côté avant par respectivement une pièce d'angle (11) au longeron de cadre avant respectivement contigu,
- les pièces d'angle (11) servent de logements de palier pour une cabine de conduite et éventuellement en supplément de palier de remorquage,
- les deux pièces d'angle (11) sont conçues comme des pièces identiques pouvant être utilisées pour les deux côtés, ce pourquoi elles sont conçues de façon à pouvoir être utilisées en tournant de 180° par rapport à l'axe longitudinal du véhicule.

3. Partie avant de châssis selon la revendication 1 ou 2, **caractérisé en ce que** les longerons du cadre avant (7) sont assemblés à partir de pièces individuelles pouvant être fabriquées de façon simple, à chaque fois une membrure supérieure et une membrure inférieure (8, 9) étant reliées entre elles par une tôle de protection latérale (11).

4. Partie avant de châssis selon la revendication 3, **caractérisé en ce que** les membrures supérieures (8) des longerons du cadre avant (7) sont conçues respectivement comme un profilé en L.

5. Partie avant de châssis selon l'une quelconque des revendications précédentes, **caractérisé en ce que** les supports de couple (14) sont conçus comme des pièces moulées.

6. Partie avant de châssis selon la revendication 5, **caractérisé en ce que** les supports de couple (14) servent au soutien de bras oscillants d'un dispositif de suspension à roue individuelle placé sur le cadre auxiliaire (12).

7. Partie avant de châssis selon l'une quelconque des revendications précédentes, **caractérisé en ce que** les supports latéraux (13, 17) du module principal (2) arrière sont constitués de tôles formées.

8. Partie avant de châssis selon l'une quelconque des revendications précédentes, **caractérisé en ce que** le cadre auxiliaire (12) peut être fixé à différentes positions de hauteur sur les longerons (3) pour obtenir différentes positions de hauteur par rapport aux longerons (3) du châssis de véhicule.

9. Partie avant de châssis selon l'une quelconque des revendications précédentes, **caractérisé en ce que** les supports latéraux (17) supérieurs peuvent être fixés à différentes positions de hauteur sur les supports de couple (14) pour obtenir différentes positions de hauteur du module principal (2) arrière par rapport aux longerons (3) du châssis de véhicule.
